# EUROPÄISCHE PATENTSCHRIFT

(11) **EP 4 295 004 B1**
(45) Veröffentlichungstag und Bekanntmachung des Hinweises auf die Patenterteilung: **18.06.2025**
(21) Anmeldenummer: 22713935.9
(22) Anmeldetag: 11.03.2022
(51) Int. Cl.: E05F 11/38, E05F 15/689

(54) **BAUGRUPPE EINER VERSTELLEINRICHTUNG EINES KRAFTFAHRZEUGS**
ASSEMBLY OF AN ADJUSTMENT DEVICE OF A MOTOR VEHICLE
ENSEMBLE D'UN DISPOSITIF DE RÉGLAGE D'UN VÉHICULE AUTOMOBILE

(30) Priorität: 18.03.2021 DE 102021202669
(43) Veröffentlichungstag der Anmeldung: 27.12.2023
(73) Patentinhaber: Brose Fahrzeugteile SE & Co. Kommanditgesellschaft, Bamberg, 96052 Bamberg (DE)
(72) Erfinder: CARL, Andre, 96237 Ebersdorf (DE)
(74) Vertreter: FDST Patentanwälte
(86) Internationale Anmeldenummer: PCT/EP2022/056287
(87) Internationale Veröffentlichungsnummer: WO 2022/194685

(56) Entgegenhaltungen:
- DE-A1- 102009 037 674
- DE-U1- 202015 102 718

## Beschreibung

Die Erfindung betrifft eine Baugruppe einer Verstelleinrichtung eines Kraftfahrzeugs, mit einem schienengeführten Verstellteil, insbesondere für eine funktionalisierte oder mit einer funktionalisierten Fensterscheibe, eines (fahrbahngebundenen) Kraftfahrzeugs. Eine derartige Baugruppe ist beispielsweise aus der DE 20 2015 102 718 U1 bekannt. Sie betrifft weiter einen Fensterheber eines Kraftfahrzeugs, mit einer solchen Baugruppe.

Unter einer derartigen Baugruppe wird hierbei insbesondere ein Türmodul mit einer Trägerplatte oder eine solche Trägerplatte verstanden, auf welcher Komponenten oder Bauteile eines, insbesondere elektromotorischen, Fensterhebers, vorzugsweise eines Seilfensterhebers, angeordnet oder montiert bzw. montierbar sind.

Unter einer funktionalisierten Fensterscheibe wird hier und im Folgenden insbesondere eine elektrisch schaltbare oder steuerbare (Kraftfahrzeug-)Verglasung, also eine Fensterscheibe mit einer elektrisch schaltbaren oder (an-)steuerbaren Funktionsschicht, insbesondere einer elektrotransparenten, einer antennenfunktionalen, einer heizbaren oder einer leuchtbaren Schicht, verstanden. Mit anderen Worten ist eine insbesondere optische und/oder thermische Funktionsschicht der Fensterscheibe vorgesehen, deren Funktionen mittels elektrischer Steuersignale beeinflussbar, veränderbar, schaltbar oder steuerbar sind. Unter funktionalisierte Fensterscheibe wird auch eine tönbare Verglasung nach Art eines elektroaktiven oder elektrochromen Glases (smart glass) verstanden.

Zur Ansteuerung solcher funktionalisierten Fensterscheiben müssen diese zur Übertragung der Steuersignale mit einer Energiequelle und/oder einer Steuereinrichtung (Controller) als Elektronik gekoppelt werden. Insbesondere bei bewegbaren oder verstellbaren Fensterscheiben eines Kraftfahrzeugs, beispielsweise einer Seitenfensterscheibe oder einem Schiebedach, ist die signalübertragungstechnische Verbindung zwischen der Fensterscheibe und der Elektronik mit einem hohen konstruktiven und montagetechnischen Aufwand verbunden.

Zudem ist die Führung von Leitungen oder eines Kabels mit solchen Leitungen für die Strom- und/oder Signalzufuhr zur Fensterscheibe häufig mit aufwendigen Hilfsmitteln und mit einem großen Bauraumbedarf verbunden. So ist eine beispielsweise aus der WO 2012/069107 A1 bekannte Hebelanordnung als Führungseinrichtung einer Leitung zwischen Anbindungsstellen an der Fensterscheibe und an einem Fahrzeugelement unerwünscht aufwendig.

Auch eine aus der DE 10 2009 037 674 A1 bekannte Führungseinrichtung, welche zur Kabel- oder Leitungsführung einen entlang einer eigenen Führungsschiene geführten Gleitstein einsetzt, ist unerwünscht aufwendig. Hinzu kommen unerwünschte Geräuschemissionen, beispielsweise beim Schließen der Fahrzeugtür (Türzuschlag).

Bei einer aus der WO 2014/122146 A1 bekannten Fensterheberbaugruppe besteht eine Führungseinrichtung aus einer das Kabel von einer Kabelzuführung an einem Modulträger zur Fensterscheibe führenden flexiblen Kabelaufnahme und einer den Verlauf der Fensterscheibe vorgebenden formstabilen Kabelaufnahmeführung, die mittels eines Drehlagers verschwenkbar am Modulträger gelagert und über ein Federelement in einer ersten Drehrichtung vorgespannt ist. Bei einem Absenken der Fensterscheibe erfolgt ein Verschwenken der formstabilen Kabelaufnahmeführung in eine zweite Drehrichtung entgegen der Vorspannung des Federelementes, während beim Anheben der Fensterscheibe ein durch das Federelement unterstütztes Verschwenken der formstabilen Kabelaufnahmeführung in die erste Drehrichtung erfolgt.

Eine konstruktiv vereinfachte Kabelführung einer Fensterheberbaugruppe unter Verwendung einer formstabilen Kabelaufnahmeführung mit einer mit dem Modulträger verbundenen Wickeleinrichtung und einem Führungselement, welches eine flexible Kabelaufnahme, beispielsweise ein Wellrohr, während einer Verstellung der Fensterscheibe in einem vorbestimmten Bereich zwischen dem Modulträger und der Fahrzeugkarosserie führt, ist beispielsweise aus der DE 20 2015 102 718 U1 bekannt.

Bei der Verwendung eines zwischen einer Führungsschiene eines Fensterhebers und einem Führungselement geführten Wellrohrs mit darin zumindest bereichs- oder abschnittsweise aufgenommenem (elektrischen) Kabel besteht häufig der Nachteil bzw. das Problem, dass das Wellrohr mit dem darin aufgenommenen Kabel zur Bestromung der Fensterscheibe in einer bestimmten Stellung, insbesondere in einer oberen oder obersten Stellung der Fensterscheibe, beispielsweise temperaturbedingt eine Formveränderung einnimmt. Dies wiederum kann dazu führen, dass das Wellrohr mit dem darin aufgenommenen Kabel in einer anderen Stellung der Fensterscheibe bereichsweise undefiniert ausbeult und somit in einem nicht definierten Bereich ungeführt ist.

Der Erfindung liegt die Aufgabe zugrunde, eine besonders geeignete Baugruppe einer Verstelleinrichtung eines Kraftfahrzeugs, insbesondere mit einer funktionalisierten oder für eine funktionalisierte Fensterscheibe, anzugeben. Des Weiteren soll ein besonders geeigneter Fensterheber angegeben werden.

Hinsichtlich der Baugruppe wird die Aufgabe mit den Merkmalen des Anspruchs 1 und hinsichtlich des Fensterhebers mit den Merkmalen des Anspruchs 10 erfindungsgemäß gelöst. Vorteilhafte Ausgestaltungen und Weiterbildungen sind Gegenstand der Unteransprüche. Die im Hinblick auf die Baugruppe angeführten Vorteile und Ausgestaltungen sind sinngemäß auch auf den Fensterheber übertragbar und umgekehrt.

Die Baugruppe ist Bestandteil einer Verstelleinrichtung eines Kraftfahrzeugs oder eine solche Verstelleinrichtung selbst. Baugruppe weist einen Träger auf, an dem mindestens eine Führungsschiene angeordnet ist. Die Baugruppe weist des Weiteren ein an der Führungsschiene verschiebbar geführtes Verstellteil und ein flexibles Führungsrohr zur Führung eines mit dem Verstellteil verbundenen oder verbindbaren elektrischen Kabels. Ein erstes Rohrende des Führungsrohrs ist am Träger und das zweite Rohrende des Führungsrohrs ist am Verstellteil angebunden ist. Das zweite Rohrende ist während einer Verschiebung des Verstellteils entlang der Führungsschiene derart mitbewegt, dass bei einer Annäherung der beiden Rohrende zueinander das Führungsrohr bogenförmig zwangsverlagert wird. Das Führungsrohr ist in einem in Schienenlängsrichtung verlaufenden Führungsbereich zwischen der Führungsschiene und dem Träger geführt. An einer Sicherungsposition entlang der Führungsschiene und benachbart und/oder beabstandet zum Führungsbereich ein feder- oder biegeelastisches Sicherungselement zur Sicherung des Führungsrohrs gegen ein Austreten aus dem Führungsbereich vorgesehen ist. Bei der Baugruppe kann es sich um Sitzverstellung oder um ein verstellbares Schiebdach eines Kraftfahrzeugs handeln.

Insbesondere ist die Baugruppe eine Fensterheberbaugruppe, mit einer Trägerplatte (Modulträger, Aggregatemodul) als Träger, beispielsweise eines Türmoduls. Die Baugruppe weist mindestens eine Führungsschiene auf, an welcher ein Mitnehmer als Verstellteil geführt ist. Die Führungsschiene, insbesondere eines einstrangigen Fensterhebers, oder auch zwei zueinander parallele Führungsschienen, insbesondere eines zweistrangigen Fensterhebers, sind auf oder an der Trägerplatte angeordnet (montiert).

Ein, insbesondere elektromotorischer, Antrieb (Seilantrieb) ist bei einem Seilfensterheber mit einer Seiltrommel gekoppelt, auf der mindestens ein mit dem oder jedem Mitnehmer verbundenes Zugseil als Schlaufe gewickelt ist, so dass beim (Fensterheber-)Betrieb ein Seilende von der Seiltrommel abgewickelt und, insbesondere zeitgleich, das andere Seilende abgewickelt wird.

Unter Verstellteil wird im Rahmen der Erfindung zunächst allgemein ein bewegtes bzw. bewegliches Element, insbesondere ein Verbindungselement zwischen Fahrzeug- oder Baugruppenkomponenten, verstanden. Im Besonderen ist unter einem Mitnehmer ein Verbindungselement zwischen einer Fensterscheibe und einem Fensterheber eines Kraftfahrzeugs zu verstehen, welcher Mitnehmer die Fensterscheibe entlang eines Verstellweges verstellbar führt, um die Fensterscheibe im Montagezustand entlang des Verstellweges zwischen einer Schließstellung und einer Offenstellung (Öffnungsstelle) zu bewegen. Der Mitnehmer weist somit auch einen Schienengleiter oder eine Schienengleiterfunktion auf. Die Fensterscheibe ist eine funktionalisierte, insbesondere elektrisch schalt- oder steuerbare, Fensterscheibe. Diese weist zweckmäßigerweise eine elektrische Kontaktstelle als Anschlussbereich auf. Der Mitnehmer kann auch ein mit der Fensterscheibe verbundenen Scheibenadapter umfassen.

Bei der Fensterheberbaugruppe weist diese ein flexibles, insbesondere elastisches, biegeelastisches, biegeweiches und/oder elastisch verformbares Bauteil als Führungsrohr zur Führung eines mit der funktionalisierten Fensterscheibe verbundenen oder verbindbaren (elektrischen) Kabels oder einer Leitung auf. Unter Kabel wird hierbei eine Anzahl von, insbesondere mittels eines Kabel- oder Isoliermantels umgeben, Leitungen zur Stromführung und/oder Steuerung der Fensterscheibe verstanden. Das Kabel bzw. die Leitung oder Leitungen werden geeigneter Weise mit dem oder an den Mitnehmer als Verstellteil gekoppelt, der bzw. das mit dem Anschlussbereich der Fensterscheibe gekoppelt, verbunden und/oder elektrisch kontaktiert ist.

Das flexible (elastische) Bauteil kann nach Art einer Schleppkette oder als Hohlrohr oder nach Art eines Hohlrohrs ausgeführt sein, wobei ein runder, beispielsweise kreisrunder oder ovaler, oder ein eckiger, beispielsweise ein rechteckiger oder dreieckiger, Profilquerschnitt des Hohlrohres möglich ist. Vorzugsweise ist das flexible (elastische) Bauteil eine, insbesondere aus Kunststoff gefertigte, Kabelaufnahme in Form eines Wellrohrs. Das Kabel bzw. die oder jede Leitung ist geeigneter Weise zumindest über ein Teil dessen bzw. deren Länge, dies bedeutet abschnittsweise im Innern des nachfolgend als Führungsrohr bezeichneten Bauteils aufgenommen. Das Führungsrohr umschließt den entsprechenden Kabel- oder Leitungsabschnitt des zur Bestromung und/oder zur Steuerung der funktionalisierten Fensterscheibe - oder eines elektrischen Verstellantriebs im Falle eines elektromotorisch verstellbaren Sitzes oder Schiebdachs - dienenden Kabels vorzugsweise vollständig. Die Querschnittsfläche des Führungsrohr bzw. des Wellrohrs ist zweckmäßigerweise rund, insbesondere kreisrund.

Ein nachfolgend auch als trägerseitiges Rohrende bezeichnetes erstes Rohrende des Führungsrohrs ist, vorzugsweise stationär, an der Trägerplatte gehalten, angeordnet und/oder befestigt. Das nachfolgend auch als mitnehmerseitiges Rohrende bezeichnete zweite Rohrende des Führungsrohrs ist an den Mitnehmer, den Adapter oder an die Fensterscheibe angebunden, dort also ebenfalls gehalten, angeordnet und/oder befestigt. Das mitnehmerseitiges (zweite) Rohrende ist während einer typischerweise in Z-Richtung des Fahrzeugs (vertikalen) Verschiebung des Mitnehmers entlang der Führungsschiene derart mitbewegt, dass bei einer Annäherung der beiden Rohrenden zueinander das Führungsrohr bogenförmig zwangsverlagert wird.

Das Führungsrohr ist in einem in Schienenlängsrichtung verlaufenden Führungsbereich zwischen der Führungsschiene und der Trägerplatte geführt. Vorzugsweise ist der Führungsbereich eine, insbesondere in Schienenlängsrichtung offene, Längsnut oder Längsrille, in welcher das Führungsrohr über einen Teil dessen Umfangs- oder Mantelfläche einliegt. Bei einer Verstellung des Mitnehmers in Schienenlängsrichtung entlang der Führungsschiene passiert ein an das mitnehmerseitige (zweite) Rohrende des Führungsrohrs anschließender Rohrabschnitt einen an das trägerseitige (erste) Rohrende anschließenden Rohrabschnitt in einem quer zur Schienenlängsrichtung orientierten Abstand.

An einer Sicherungsposition entlang der Führungsschiene und benachbart zum Führungsbereich ist ein feder- oder biegeelastisches Sicherungselement zur Sicherung des Führungsrohrs gegen ein Austreten aus dem Führungsbereich vorgesehen. Die Sicherungsposition des Sicherungselements ist in Schienenlängsrichtung der Führungsschiene geeigneter Weise zum ersten, trägerseitigen Rohrende des Führungsrohrs (bezogen auf das typische Fahrzeugkoordinaten in Z-Richtung) beabstandet und zweckmäßigerweise in einem der Offenstellung der Fensterscheibe nahen Bereich entlang der Führungsschiene angeordnet.

Gemäß einer vorteilhaften Weiterbildung weist das Sicherungselement einen federnden Biegeabschnitt auf. Das Sicherungselement ist geeigneter Weise rampenartig mit einer ansteigenden und mit einer abfallenden Gleitrampe ausgebildet. Dabei ist zweckmäßigerweise zumindest eine der Gleitrampen endseitig am Träger bzw. an der Trägerplatte befestigt. Vorzugsweise ist das Sicherungselement am Träger bzw. an die Trägerplatte angeformt oder aus dieser ausgeformt. Insbesondere ist das Sicherungselement derart ausgebildet und angeordnet, dass der Mitnehmer bzw. das Verstellteil bei dessen Verstellung in Schienenlängsrichtung das Sicherungselement bzw. dessen federnden Biegeabschnitt an der Sicherungsposition rückfedernd verformt. Mit anderen Worten weicht das zur Ebene der Trägerplatte (des Trägers) erhabene, insbesondere sich zu dieser (diesem) bezogen auf das typische Fahrzeugkoordinaten im Falle der Fensterheberbaugruppe aus der XY-Ebene in Y-Richtung erstreckende, Sicherungselement in die Plattenebene der Trägerplatte (des Trägers) aus, wenn es vom Mitnehmer (Verstellteil) im Zuge dessen Verstellbewegung überfahren wird.

In vorteilhafter Ausgestaltung ist an der Trägerplatte bzw. am Träger eine zur Führungsschiene beabstandet Haltekontur vorgesehen, in welcher ein an das erste Rohrende anschließender Rohrabschnitt des Führungsrohrs geführt ist. Zweckmäßigerweise ist die Haltekontur aus einer Anzahl von an der Trägerplatte (am Träger) befestigten oder aus dieser ausgeformten Rohrübergriffen gebildet. Während einer Verschiebung des Mitnehmers (Verstellteils) entlang der Führungsschiene in eine (zweite) Endstellung, beispielsweise in Offenstellung der Fensterscheibe, tritt das Führungsrohr bzw. der dem trägerseitigen Rohrende naher Rohrabschnitt des Führungsrohrs aus der Haltekontur aus bzw. in diese ein, wenn der Mitnehmer (das Verstellteil) entlang der Führungsschiene in eine weitere (erste) Endstellung, beispielsweise in Schließstellung der Fensterscheibe, verschoben wird. Besonders vorteilhaft ist die Haltekontur in einem der Schließstellung der Fensterscheibe nahen Bereich entlang der Führungsschiene angeordnet.

In einer besonders geeigneten Anwendung oder Verwendung ist die Baugruppe in einem Fensterheber eines Kraftfahrzeugs vorgesehen, welcher Fensterheber für eine nicht funktionalisierte Fensterscheibe und/oder auch für eine funktionalisierte Fensterscheibe, beispielsweise einer Fahrzeugtür, vorgesehen, geeignet und/oder eingerichtet ist. Die Baugruppe kann jedoch auch Bestandteil beispielsweise eines Schiebedachs oder einer Sitzverstellung eines Kraftfahrzeugs sein.

Nachfolgend wird ein Ausführungsbeispiele der Erfindung anhand einer Zeichnung näher erläutert. Darin zeigen:
- Fig. 1: ausschnittsweise eine Baugruppe eines (Seil-)Fensterhebers mit entlang einer Führungsschiene angeordnetem Führungsrohr für ein elektrisches Kabels zur Steuerung und/oder Stromversorgung einer funktionalisierten Fensterscheibe, die an einem entlang der Führungsschienen geführten Mitnehmern gehalten oder befestigbar (montierbar) ist,
- Fig. 2: ausschnittsweise in einer perspektivischen Darstellung die Baugruppe gemäß Fig. 1 mit gegenüber der Mitnehmerposition in Fig. 1 in eine Offenstellung verlagertem mitnehmerseitigem Rohrende,
- Fig. 3: eine perspektivische Schnittdarstellung entlang der Linie III-III in Fig. 2, und
- Fig. 4 und 5: ausschnittsweise in perspektivischen Darstellungen die Baugruppe gemäß Fig. 1 ohne bzw. mit Führungsrohr im Bereich eines Sicherungselementes hierfür.

Einander entsprechende Teile und Größen sind in allen Figuren stets mit den gleichen Bezugszeichen versehen.

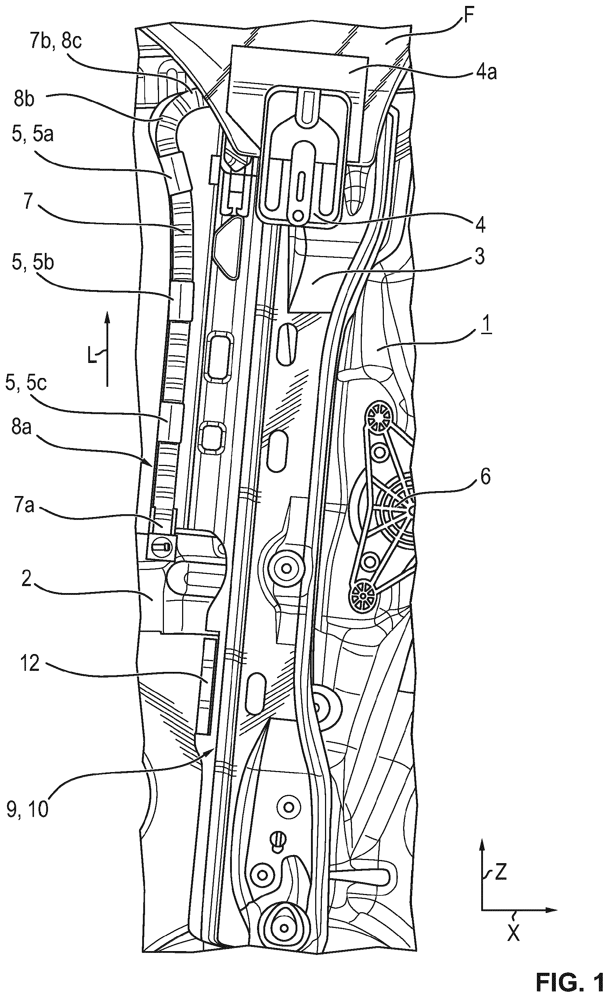

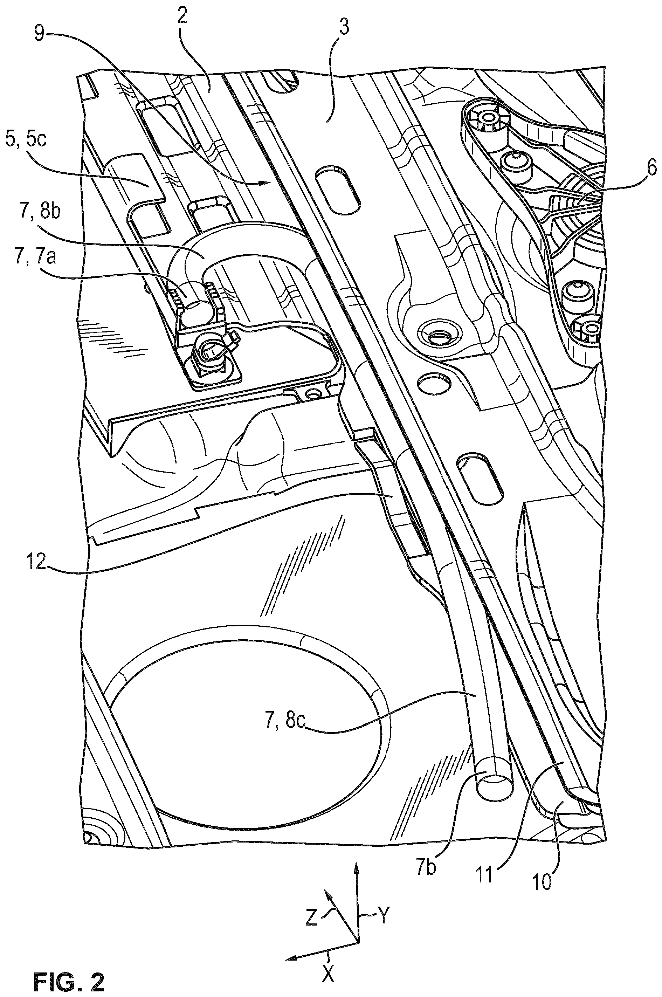

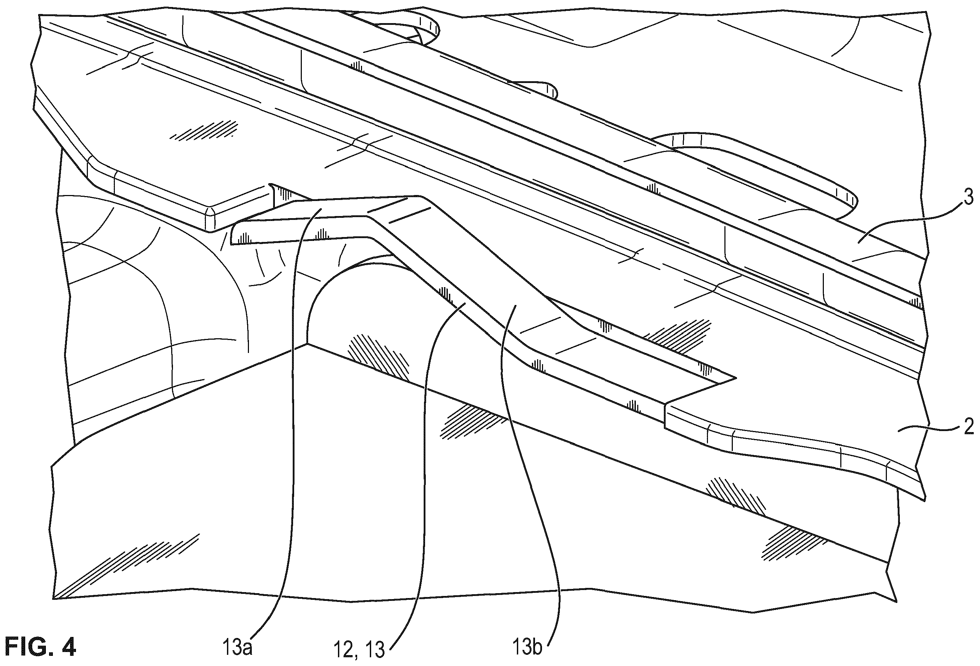

Fig. 1 zeigt eine Baugruppe 1 als Bestandteil einer Verstelleinrichtung eines Kraftfahrzeugs, mit einer Trägerplatte (Träger) 2, beispielsweise eines Türmoduls. Konkret zeigt Fig. 1 eine nachfolgend auch als Fensterheber bezeichnete Fensterheberbaugruppe, welche in den Figuren 2 bis 5 teilweise (ausschnittsweise) gezeigt ist.

Nachfolgend sind Angaben hinsichtlich der Raumrichtungen auch insbesondere in einem Koordinatensystem des Kraftfahrzeugs (Fahrzeugkoordinatensystem) bezüglich einer beispielhaften Einbausituation eines Fensterhebers in einer Seitentür des Kraftfahrzeugs angegeben. Die Abszissenachse (X-Achse, X-Richtung) ist hierbei entlang der Fahrzeuglängsrichtung (Fahrrichtung) und die Ordinatenachse (Y-Achse, Y-Richtung) entlang der Fahrzeugquerrichtung sowie die Applikatenachse (Z-Achse, Z-Richtung) entlang der Fahrzeughöhe orientiert.

Die Baugruppe 1 weist zumindest eine Führungsschiene 3 auf, an welcher ein Mitnehmer 4 als Verstellteil mit Schienengleiterfunktion oder eine Schienengleiter mit Mitnehmerfunktion in Schienenlängsrichtung L schiebebeweglich geführt ist. Die Führungsschiene 3 ist auf der Trägerplatte 2 angeordnet (montiert). An der Trägerplatte 2 ist eine Haltekontur oder -struktur 5 vorgesehen bzw. angeordnet. Die Haltekontur 5, die sich in einem Abstand zur Führungsschiene 3 befindet, ist im Ausführungsbeispiel von aus der Trägerplatte 2 ausgeformten Übergriffelementen 5a bis 5c gebildet, die in Z-Richtung zueinander beabstandet sind.

Ein elektromotorischer Antrieb (Seilantrieb) 6 ist in nicht näher dargestellter Art und Weise mit einer Seiltrommel gekoppelt, auf der ein mit dem Mitnehmer 4 verbundenes und über schienen- oder trägerseitige Umlenkelemente geführtes Zugseil als Schlaufe gewickelt ist, so dass beim Betrieb des Fensterhebers ein Seilende auf die Seiltrommel aufgewickelt und das andere Seilende von dieser abgewickelt wird. Hierdurch erfolgt eine Verstellung einer mit dem Mitnehmer 4 über einen (Scheiben-)Adapter 4a verbundenen Fensterscheibe F, um diese im Montagezustand entlang des Verstellweges zwischen einer Schließstellung (erste Endstellung) und einer Offenstellung (zweite Endstellung) zu bewegen. Die Fensterscheibe F ist hierbei eine funktionalisierte, insbesondere elektrisch schalt- oder steuerbare, Fensterscheibe. Diese weist zweckmäßigerweise eine elektrische Kontaktstelle als Anschlussbereich auf, der mit einem Anschlussbereich des Mitnehmers 4 oder des Adapters 4a korrespondiert.

Ferner weist die Baugruppe 1 ein flexibles, d. h. ein elastisches, insbesondere biegeelastisches, Bauteil in Form eines Führungsrohres 7 zur Aufnahme und Führung eines mit der funktionalisierten Fensterscheibe F verbundenen oder verbindbaren elektrischen Kabels oder einer Leitung auf. Unter Kabel wird hierbei eine Anzahl von, insbesondere mittels eines Kabel- oder Isoliermantels umgeben, Leitungen zur Stromführung und/oder zur Steuerung der Fensterscheibe F verstanden. Das Kabel wird geeigneter Weise mit dem oder an den Mitnehmer 4 oder an den Adapter 4a gekoppelt, der seinerseits mit dem Anschlussbereich der Fensterscheibe F gekoppelt, verbunden und/oder elektrisch kontaktiert ist.

Das flexible (elastische) Führungsrohr 7 ist vorzugsweise nach Art einer Schleppkette wirksam und besonders bevorzugt als Wellrohr ausgeführt. Das Kabel bzw. die oder jede Leitung ist geeigneter Weise zumindest über einen Teil dessen bzw. deren Länge, dies bedeutet abschnittsweise im Innern des flexiblen Führungsrohr 7 aufgenommen. Das Führungsrohr 7 ist geeigneter Weise aus einem Kunststoff gefertigt. Das Führungsrohr 7 umschließt den entsprechenden Kabel- oder Leitungsabschnitt vorzugsweise vollständig, nimmt also den entsprechenden Kabelabschnitt auf. Die Querschnittsfläche des Führungsrohrs 7 ist zweckmäßigerweise rund, insbesondere kreisrund.

Das Führungsrohr 7 ist mit einem ersten, trägerseitigen Rohrende 7a an der Trägerplatte 2 gehalten bzw. an diese angebunden. Das andere (zweite) Rohrende 7b des Führungsrohrs 7 ist am Mitnehmer 4 (mitnehmerseitig) oder am Adapter 4a oder auch an der Fensterscheibe F gehalten oder mit diesem bzw. mit dieser verbunden. Ein an das trägerseitige Rohrende 7a anschließender erster oder oberer Rohrabschnitt 8a des Führungsrohrs 7 ist in im Bereich der trägerseitigen Haltekontur 5 an dieser oder am Trägerelement 2 gehalten oder damit verbunden. Die Haltekontur 5 erstreckt sich in Z-Richtung und ist etwa parallel zur Führungsschiene 3 orientiert. Insbesondere ist die Haltestruktur 5 zur Führungsschiene 3 beabstandet angeordnet.

Bei der in Fig. 1 gezeigten Stellung des Mitnehmers 4 in einer der Schließstellung der Fensterscheibe entsprechenden Position erstreckt sich der erste oder obere Rohrabschnitt 8a des Führungsrohrs 7 vom trägerseitigen (ersten) Rohrende 7a bis zu einem etwa U-förmigen Wendeabschnitt 8b des Führungsrohrs 7. Hierbei schließt sich das zweite, mitnehmerseitige Rohrende 7b des Führungsrohrs 7 praktisch direkt an den Wendeabschnitt 8b des Führungsrohrs 7 an.

Bei der in Fig. 2 dargestellten Mitnehmerposition in einer der Offenstellung der Fensterscheibe entsprechenden Stellung des Mitnehmers 4 schließt sich das erste, trägerseitige Rohrende 7a des Führungsrohrs 7 praktisch direkt an dessen Wendeabschnitt 8b an, während sich dann an das mitnehmerseitige, zweite Rohrende 7b ein zweiter oder unterer Rohrabschnitt 8c des Führungsrohrs 7 anschließt. Mit anderen Worten verlagert sich der Wendeabschnitt 8b des Führungsrohrs 7 bei einer Verstellung des Mitnehmers 4 in Schienenlängsrichtung L von einer oberen (ersten) Position (der Fensterscheibe F) in eine untere (zweite) Position (der Fensterscheibe F) nach unten bzw. bei einer Verstellung des Mitnehmers 4 in Gegenrichtung nach oben. Dabei verändert sich die jeweilige Länge der Rohrabschnitt 8a und 8c des Führungsrohrs 7 entsprechend.

In Fig. 1 ist erkennbar, dass die Haltestruktur 5 in einem der Schließstellung der Fensterscheibe nahen Bereich entlang der Führungsschiene 3 angeordnet ist. Die trägerseitige Haltestruktur 5 ist aus einer Anzahl von an der Trägerplatte 2 befestigten, vorzugsweise aus dieser ausgeformten, Rohrübergriffen als Übergriffelemente 5a bis 5c gebildet. Die trägerseitige Haltestruktur 5 mit deren Rohrübergriffen 5a bis 5c ist der Führungsschiene 3 in X-Richtung in einem Abstand vorgelagert.

Während einer Verschiebung des Mitnehmers 4 in Schienenlängsrichtung L entlang der Führungsschiene 3 in eine Offenstellung der Fensterscheibe tritt das Führungsrohr 7 bzw. dessen (oberer, erster) Rohrabschnitt 8a aus der Haltekontur 5 aus und in diese erneut ein, wenn der Mitnehmer 4 entlang der Führungsschiene 3 in eine der Darstellung in Fig. 1 entsprechenden Schließstellung der Fensterscheibe F verschoben wird.

Das Führungsrohr 7 ist zudem an der Führungsschiene 3 geführt. Die Führungsschiene 3 weist hierzu einen in Schienenlängsrichtung verlaufenden Führungsbereich 9 für das Führungsrohr 7 auf. Dieser ist eine Längsnut oder eine Längsrille 10, die als in X-Richtung offener Führungskanal wirksam, in welchem das Führungsrohr 7 über einen Teil dessen Umfangs- oder Mantelfläche einliegt. Die Längsnut oder Längsrille 10 ist zwischen der Trägerplatte 2 und einer aus deren Ebene aufstehenden Aufkantung 11 der Führungsschiene 3 gebildet.

Das mitnehmerseitiges (zweite) Rohrende 7b des Führungsrohrs 7 ist während einer in Z-Richtung des Fahrzeugs verlaufenden (vertikalen) Verschiebung des Mitnehmers 4 entlang der Führungsschiene 3 derart mitbewegt, dass bei einer Annäherung der beiden Rohrende 7a, 7b zueinander das Führungsrohr 7 bogenförmig zwangsverlagert wird. Der entsprechende Verlauf des Führungsrohrs 7 von einer der Schließstellung der Fensterscheibe entsprechenden oberen Position des Mitnehmers 4 in eine der Offenstellung der Fensterscheibe F entsprechenden unteren Position ist in den Figuren 1 bzw. 2 verdeutlicht. Dabei ist das Führungsrohr 7 zunächst in der zur Führungsschien 3 etwa parallelen Haltekontur 5 und anschließend zunehmend im in Schienenlängsrichtung L verlaufenden Führungsbereich 9 zwischen der Führungsschiene 3 und der Trägerplatte 2 geführt.

Wie in Fig. 2 erkennbar ist, liegt nun das Führungsrohr 7 mit dem an das mitnehmerseitige (zweite) Rohrende 7b anschließenden Rohrabschnitt 8c in dem Führungsbereich 9 ein, ist also darin geführt. Bei einer Verstellung des Mitnehmers 4 in Schienenlängsrichtung L entlang der Führungsschiene 3 passiert der an das mitnehmerseitige (zweite) Rohrende 7b des Führungsrohrs 7 anschließende Rohrabschnitt 8c den an das trägerseitige (erste) Rohrende 7a anschließenden Rohrabschnitt 8a in einem quer zur Schienenlängsrichtung L orientierten Abstand.

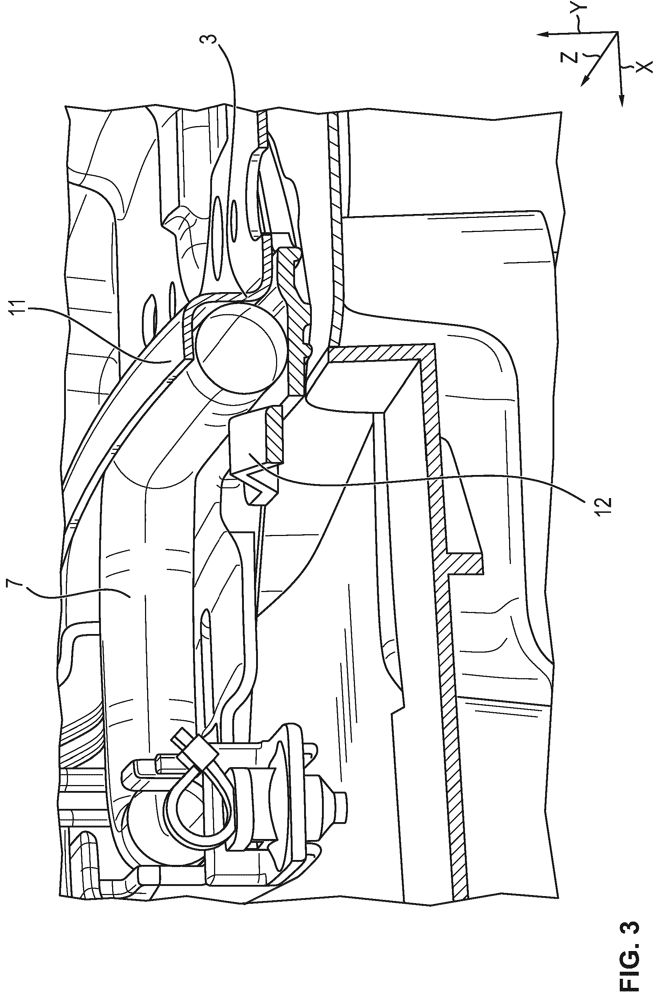

Wie aus den Figuren 3 bis 5 vergleichsweise deutlich ersichtlich ist, ist an einer Sicherungsposition P entlang der Führungsschiene 3 und benachbart zum Führungsbereich 9 ein feder- oder biegeelastisches Sicherungselement 12 zur Sicherung des Führungsrohrs 7 gegen ein Austreten aus dem Führungsbereich 9 vorgesehen. Das Sicherungselement 12 ist der Führungsschiene 3 in X-Richtung in einem Abstand vorgelagert, der vorzugsweise zumindest geringfügig kleiner ist als der Rohrdurchmesser des Führungsrohrs 7.

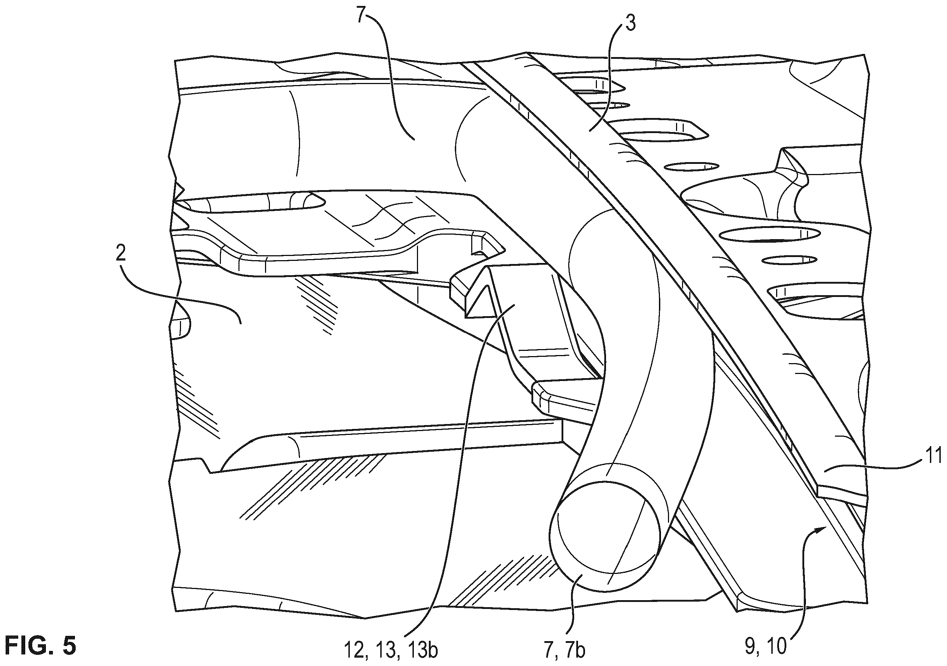

Wie in Fig. 5 vergleichsweise deutlich erkennbar ist, ist der Abstand bzw. die lichte Weite zwischen dem Sicherungselement 12 und der dieser zugewandten Schienenkante der Führungsschiene 3 kleiner oder gleich dem halben Durchmesser des Führungsrohrs 7. Die Sicherungsposition P des Sicherungselements 12 ist in Schienenlängsrichtung L der Führungsschiene 3 zum ersten, trägerseitigen Rohrende 7a des Führungsrohrs 7 in Z-Richtung beabstandet und in einem der Offenstellung der Fensterscheibe nahen Bereich entlang der Führungsschiene 3 angeordnet, wie aus Fig. 1 vergleichsweise deutlich ersichtlich ist.

Wie aus Fig. 5 ersichtlich ist, ist das Sicherungselement 12 ein federnder Biegeabschnitt 13 oder das Sicherungselement 12 weist einen solchen Biegeabschnitt 13 auf, der vorzugsweise aus der Trägerplatte 2, beispielsweise als Stanz-BiegeTeil, ausgeformt ist. Das Sicherungselement 12 ist nach Art eines Satteldachs vorzugsweise rampenartig mit in Schienenlängsrichtung L ansteigender und abfallender Gleitrampe 13a bzw. 13b ausgebildet. Dabei ist eine der Gleitrampen - hier die Gleitrampe 13b - endseitig an der Trägerplatte 2 angeformt.

Das Sicherungselement 12 ist derart ausgebildet und angeordnet, dass der Mitnehmer 4 bei dessen Verstellung in Schienenlängsrichtung L das Sicherungselement 12 bzw. dessen federnden Biegeabschnitt 13 an der Sicherungsposition P rückfedernd verformt. Dabei weicht das aus der XY-Ebene der Trägerplatte 2 vor- oder überstehende Sicherungselement 12 in die XY-Platteneben der Trägerplatte 2 zurück, wenn es vom Mitnehmer 4 im Zuge dessen Verstellbewegung überfahren wird. Dabei wird der rückfedernde Biegeabschnitt 13 bzw. werden dessen Gleitrampen 13a, 13b gestreckt, d. h. der Winkel zwischen den Gleitrampen 13a und 13b wird vergrößert und der Biegeabschnitt 13 wird abgeflacht. Auf diese Weise ist zuverlässig verhindert, dass das Führungsrohr 7 oder ein Rohrabschnitt hiervon aus dem Führungsbereich 9 austreten kann.

Zusammenfassend betrifft die Erfindung eine Baugruppe 1 einer Verstelleinrichtung eines Kraftfahrzeugs, aufweisend eine Trägerplatte als Träger 2, an der bzw. an dem mindestens eine Führungsschiene 3 angeordnet ist, einen daran verschiebbar geführten Mitnehmer als Verstellteil 4, insbesondere für eine funktionalisierte Fensterscheibe F, und ein flexibles Führungsrohr 7 zur Führung eines Kabels, insbesondere zur Bestromung und/oder zur Steuerung der funktionalisierten Fensterscheibe F, wobei das Führungsrohr 7 in einem in Schienenlängsrichtung L verlaufenden Führungsbereich 9 zwischen der Führungsschiene 3 und der Trägerplatte als Träger 2 geführt ist, und wobei an einer Sicherungsposition P entlang der Führungsschiene 3 und benachbart zum Führungsbereich 9 ein feder- oder biegeelastisches Sicherungselement 12 zur Sicherung des Führungsrohrs 7 gegen ein Austreten aus dem Führungsbereich 9 vorgesehen ist.

Die beanspruchte Erfindung ist nicht auf das vorstehend beschriebene Ausführungsbeispiel beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen. Insbesondere sind ferner alle im Zusammenhang mit den verschiedenen Ausführungsbeispielen beschriebenen Einzelmerkmale im Rahmen der offenbarten Ansprüche auch auf andere Weise kombinierbar, ohne den Gegenstand der beanspruchten Erfindung zu verlassen.

Zudem kann die beschriebene Lösung nicht nur in dem speziell dargestellten Anwendungsfall zum Einsatz kommen, sondern auch in ähnlicher Ausführung bei anderen Kraftfahrzeug-Anwendungen, wie zum Beispiel bei einem verstellbaren Schiebedach im Fahrzeug, bei Tür- und Heckklappensystemen, bei Fahrzeugschlössern, bei verstellbaren Sitz- und Innenraumsystemen sowie bei elektrischen Antrieben, Steuerungen, Sensoren und deren Anwendung im Fahrzeug.

### Bezugszeichenliste

- 1: Baugruppe
- 2: Träger/-platte
- 3: Führungsschiene
- 4: Verstellteil/Mitnehmer
- 4a: (Scheiben-)adapter
- 5: Haltekontur/-struktur
- 5a bis 5c: Rohrübergriffe/Übergriffelement
- 6: Seil-/Antrieb
- 7: Führungsrohr
- 7a: erstes Rohrende
- 7b: zweites Rohrende
- 8a: erster/oberer Rohrabschnitt
- 8b: Wendeabschnitt
- 8c: zweiter/unterer Rohrabschnitt
- 9: Führungsbereich
- 10: Längsnut/-rille
- 11: Aufkantung
- 12: Sicherungselement
- 13: Biegeabschnitt
- 13a, 13b: Gleitrampe

- F: (funktionalisierte) Fensterscheibe
- L: Schienenlängsrichtung
- P: Sicherungsposition

## Patentansprüche

1. Baugruppe (1) einer Verstelleinrichtung eines Kraftfahrzeugs, aufweisend
- einen Träger (2), an dem mindestens eine Führungsschiene (3) angeordnet ist,
- ein an der Führungsschiene (3) verschiebbar geführtes Verstellteil (4), und
- ein flexibles Führungsrohr (7) zur Führung eines mit dem Verstellteil verbundenen oder verbindbaren elektrischen Kabels,
- wobei ein erstes Rohrende (7a) des Führungsrohrs (7) am Träger (2) und das zweite Rohrende (7b) des Führungsrohrs (7) am Verstellteil (4) angebunden ist,
- wobei das zweite Rohrende (7b) während einer Verschiebung des Verstellteils (4) entlang der Führungsschiene (3) derart mitbewegt ist, dass bei einer Annäherung der beiden Rohrenden (7a, 7b) zueinander das Führungsrohr (7) bogenförmig zwangsverlagert wird, **dadurch gekennzeichnet, dass**
das Führungsrohr (7) in einem in Schienenlängsrichtung (L) verlaufenden Führungsbereich (9) zwischen der Führungsschiene (3) und dem Träger (2) geführt ist, und
dass an einer Sicherungsposition (P) entlang der Führungsschiene (3) und benachbart und/oder beabstandet zum Führungsbereich (9) ein feder- oder biegeelastisches Sicherungselement (12) zur Sicherung des Führungsrohrs (7) gegen ein Austreten aus dem Führungsbereich (9) vorgesehen ist.

2. Baugruppe (1) nach Anspruch 1,
**dadurch gekennzeichnet,**
**dass** bei einer Verstellung des Verstellteils (4) in Schienenlängsrichtung (L) entlang der Führungsschiene (3) ein an das zweite Rohrende (7b) des Führungsrohrs (7) anschließender Rohrabschnitt (8c) einen an das erste Rohrende (7a) des Führungsrohrs (7) anschließenden Rohrabschnitt (8a) in einem quer zur Schienenlängsrichtung (L) orientierten Abstand passiert.

3. Baugruppe (1) nach Anspruch 1 oder 2,
**dadurch gekennzeichnet,**
**dass** der Führungsbereich (9) eine Längsnut oder Längsrille (10) ist oder eine solche aufweist, in welcher das Führungsrohr (7) über einen Teil dessen Umfangs- oder Mantelfläche einliegt.

4. Baugruppe (1) nach einem der Ansprüche 1 bis 3,
**dadurch gekennzeichnet,**
**dass** am Träger (2) eine zur Führungsschiene (3) beabstandete Haltekontur (5) vorgesehen ist, in welcher ein an das erste Rohrende (7a) anschließender Rohrabschnitt (8a) des Führungsrohrs (7) geführt ist.

5. Baugruppe (1) nach Anspruch 4,
**dadurch gekennzeichnet,**
- **dass** die Haltekontur (5) aus einer Anzahl von am Träger (2) befestigten oder aus dieser ausgeformten Rohrübergriffen (5a, 5b, 5c) gebildet ist, und/oder
- **dass** die Haltekontur (5) in einem einer ersten Endposition des Verstellteils (4) nahen Bereich entlang der Führungsschiene (3) angeordnet ist.

6. Baugruppe (1) nach Anspruch 4 oder 5,
**dadurch gekennzeichnet,**
- **dass** das Führungsrohr (7) während einer Verschiebung des Verstellteils (4) entlang der Führungsschiene (3) in eine zweite Endposition des Verstellteils (4) aus der Haltekontur (5) austritt, und/oder
- **dass** das Führungsrohr (7) während einer Verschiebung des Verstellteils (4) entlang der Führungsschiene (3) in die erste Endposition in die Haltekontur (5) eintritt.

7. Baugruppe (1) nach einem der Ansprüche 1 bis 6, **dadurch gekennzeichnet,**
- **dass** die Sicherungsposition (P) des Sicherungselements (12) in Schienenlängsrichtung (L) der Führungsschiene (3) zum ersten Rohrende (7a) des Führungsrohrs (7) beabstandet ist, und/oder
- **dass** die Sicherungsposition (P) des Sicherungselements (12) in einem der zweiten Endstellung des Verstellteils (4) nahen Bereich entlang der Führungsschiene (3) angeordnet ist.

8. Baugruppe (1) nach einem der Ansprüche 1 bis 7,
**dadurch gekennzeichnet,**
**dass** das Sicherungselement (12) einen federnden Biegeabschnitt (13) und/oder eine ansteigende und eine abfallendende Gleitrampe (13a, 13b) aufweist.

9. Baugruppe (1) nach einem der Ansprüche 1 bis 8,
**gekennzeichnet durch**
dass das Sicherungselement (12) derart ausgebildet und/oder positioniert ist, dass das Verstellteil (4) bei dessen Verstellung in Schienenlängsrichtung (L) das Sicherungselement (12) an der Sicherungsposition (P) rückfedernd verformt.

10. Fensterheber eines Kraftfahrzeugs, mit einer Baugruppe (1) nach einem der Ansprüche 1 bis 9.

## Claims

1. Assembly (1) of an adjustment device of a motor vehicle, having
- a support (2) on which at least one guide rail (3) is disposed,
- an adjustment part (4) which is guided so as to be displaceable on the guide rail (3), and
- a flexible guide tube (7) for guiding an electrical cable connected or connectable to the adjustment part,
- wherein a first tube end (7a) of the guide tube (7) is attached to the support (2), and the second tube end (7b) of the guide tube (7) is attached to the adjustment part (4),
- wherein the second tube end (7b) during a displacement of the adjustment part (4) along the guide rail (3) is conjointly moved in such a manner that, when the two tube ends (7a, 7b) converge, the guide tube (7) is forced to move in an arcuate manner, **characterized in that**
the guide tube (7) is guided in a guide region (9) extending in the rail longitudinal direction (L) between the guide rail (3) and the support (2), and
**in that** a spring-elastic or flexible-elastic securing element (12) for securing the guide tube (7) in relation to exiting the guide region (9) is provided at a securing position (P) along the guide rail (3), so as to be adjacent to and/or spaced apart from the guide region (9).

2. Assembly (1) according to Claim 1,
**characterized in that**
during an adjustment of the adjustment part (4) in the rail longitudinal direction (L) along the guide rail (3), a tubular portion (8c), which adjoins the second tube end (7b) of the guide tube (7), passes through a tubular portion (8a), which adjoins the first tube end (7a) of the guide tube (7), at a spacing oriented transversely to the rail longitudinal direction (L).

3. Assembly (1) according to Claim 1 or 2, **characterized in that**
the guide region (9) is a longitudinal groove or longitudinal flute (10), or has one of the latter, in which the guide tube (7) is inserted over a part of its circumferential or shell face.

4. Assembly (1) according to one of Claims 1 to 3, **characterized in that**
provided on the support (2) is a holding contour (5) which is spaced apart from the guide rail (3) and in which a tubular portion (8a), which adjoins the first tube end (7a), of the guide tube (7) is guided.

5. Assembly (1) according to Claim 4,
**characterized in that**
- the holding contour (5) is formed by a number of tube brackets (5a, 5b, 5c) which are fastened to the support (2) or integrally moulded on the latter, and/or
- **in that** the holding contour (5) is disposed in a region along the guide rail (3) close to a first terminal position of the adjustment part (4).

6. Assembly (1) according to Claim 4 or 5, **characterized in that**
- the guide tube (7), during a displacement of the adjustment part (4) along the guide rail (3) to a second terminal position of the adjustment part (4), exits the holding contour (5), and/or
- **in that** the guide tube (7), during a displacement of the adjustment part (4) along the guide rail (3) to the first terminal position, enters the holding contour (5).

7. Assembly (1) according to one of Claims 1 to 6, **characterized in that**
- the securing position (P) of the securing element (12) in the rail longitudinal direction (L) of the guide rail (3) is spaced apart from the first tube end (7a) of the guide tube (7), and/or
- **in that** the securing position (P) of the securing element (12) is disposed in a region along the guide rail (3) close to the second terminal position of the adjustment part (4).

8. Assembly (1) according to one of Claims 1 to 7, **characterized in that**
the securing element (12) has a resilient bending portion (13) and/or an ascending and a descending sliding ramp (13a, 13b).

9. Assembly (1) according to one of Claims 1 to 8, **characterized in that**
the securing element (12) is designed and/or positioned in such a manner that the adjustment part (4), when being adjusted in the rail longitudinal direction (L), springs back so as to deform the securing element (12) at the securing position (P).

10. Window regulator of a motor vehicle, having an assembly (1) according to one of Claims 1 to 9.

## Revendications

1. Module (1) d'un dispositif de réglage d'un véhicule automobile, présentant
- un support (2) sur lequel au moins un rail de guidage (3) est disposé,
- une pièce de réglage (4) guidée de manière déplaçable sur le rail de guidage (3), et
- un tube de guidage souple (7) pour guider un câble électrique relié ou pouvant être relié à la pièce de réglage,
- dans lequel une première extrémité de tube (7a) du tube de guidage (7) est rattachée au support (2), et la deuxième extrémité de tube (7b) du tube de guidage (7) est rattachée à la pièce de réglage (4),
- dans lequel, pendant un déplacement de la pièce de réglage (4) le long du rail de guidage (3), la deuxième extrémité de tube (7b) est également déplacée de telle sorte que lorsque les deux extrémités de tube (7a, 7b) s'approchent l'une de l'autre, le tube de guidage (7) est déplacé de manière forcée en forme d'arc, **caractérisé**
**en ce que** le tube de guidage (7) est guidé dans une zone de guidage (9) s'étendant dans la direction longitudinale de rail (L) entre le rail de guidage (3) et le support (2), et
**en ce que** dans une position de blocage (P) le long du rail de guidage (3) et de manière adjacente et/ou espacée par rapport à la zone de guidage (9), un élément de blocage (12) faisant ressort ou élastique en flexion est prévu pour bloquer le tube de guidage (7) contre toute sortie de la zone de guidage (9).

2. Module (1) selon la revendication 1,
**caractérisé**
**en ce qu'**en cas de réglage de la pièce de réglage (4) dans la direction longitudinale de rail (L) le long du rail de guidage (3), une section de tube (8c) consécutive à la deuxième extrémité de tube (7b) du tube de guidage (7) passe devant une section de tube (8a) consécutive à la première extrémité de tube (7a) du tube de guidage (7) à une distance orientée transversalement à la direction longitudinale de rail (L).

3. Module (1) selon la revendication 1 ou 2,
**caractérisé**
**en ce que** la zone de guidage (9) est ou présente une rainure longitudinale ou une entaille longitudinale (10) dans laquelle le tube de guidage (7) est inséré sur une partie de sa surface circonférentielle ou latérale.

4. Module (1) selon l'une quelconque des revendications 1 à 3,
**caractérisé**
**en ce qu'**un contour de maintien (5) espacé du rail de guidage (3) est prévu sur le support (2), dans lequel une section de tube (8a) du tube de guidage (7), consécutive à la première extrémité de tube (7a), est guidée.

5. Module (1) selon la revendication 4,
**caractérisé**
- **en ce que** le contour de maintien (5) est formé par un certain nombre de recouvrements de tube (5a, 5b, 5c) fixés au support (2) ou formés à partir de celui-ci, et/ou
- **en ce que** le contour de maintien (5) est disposé dans une zone près d'une première position d'extrémité de la pièce de réglage (4) le long du rail de guidage (3).

6. Module (1) selon la revendication 4 ou 5, **caractérisé**
- **en ce que** pendant un déplacement de la pièce de réglage (4), le long du rail de guidage (3), le tube de guidage (7) sort du contour de maintien (5) vers une deuxième position d'extrémité de la pièce de réglage (4), et/ou
- **en ce que** pendant un déplacement de la pièce de réglage (4) le long du rail de guidage (3) vers la première position d'extrémité, le tube de guidage (7) entre dans le contour de maintien (5).

7. Module (1) selon l'une quelconque des revendications 1 à 6,
**caractérisé**
- **en ce que** la position de blocage (P) de l'élément de blocage (12) dans la direction longitudinale de rail (L) du rail de guidage (3) est espacée par rapport à la première extrémité de tube (7a) du tube de guidage (7), et/ou
- **en ce que** la position de blocage (P) de l'élément de blocage (12) est disposée dans une zone près de la deuxième position d'extrémité de la pièce de réglage (4) le long du rail de guidage (3).

8. Module (1) selon l'une quelconque des revendications 1 à 7,
**caractérisé**
**en ce que** l'élément de blocage (12) présente une section de flexion (13) faisant ressort et/ou une rampe de coulissement (13a, 13b) montante et une rampe descendante.

9. Module (1) selon l'une quelconque des revendications 1 à 8,
**caractérisé**
**en ce que** l'élément de blocage (12) est réalisé et/ou positionné de telle sorte que la pièce de réglage (4), lorsqu'elle est réglée dans la direction longitudinale de rail (L), l'élément de blocage (12) se déforme en faisant ressort de rappel dans la position de blocage (P).

10. Lève-vitre d'un véhicule automobile, comprenant un module (1) selon l'une quelconque des revendications 1 à 9.
